# EUROPEAN PATENT APPLICATION

(11) **EP 3 890 101 A1**
(43) Date of publication of application: **06.10.2021**
(21) Application number: 20904267.0
(22) Date of filing: 31.12.2020
(51) Int. Cl.: H01M 50/20, H01M 50/502, H01M 10/6554, H01M 10/625, H01M 10/613, B60L 50/64, B60L 50/60

(54) **BATTERY PACK COMPRISING HV WIRE ASSEMBLY, AND METHOD FOR MANUFACTURING BATTERY PACK**

(30) Priority: 07.01.2020 KR 20200002138
(71) Applicant: LG ENERGY SOLUTION, LTD., Seoul 07335 (KR)
(72) Inventor: LEE, Yong Hoon, Daejeon 34122 (KR)
(74) Representative: Plasseraud IP
(86) International application number: PCT/KR2020/019489
(87) International publication number: WO 2021/141325

(57) **Abstract**

The present invention relates to a battery pack comprising an HV wire assembly and a method for manufacturing the battery pack and can increase the efficiency of the assembly process of a battery pack and improve the safety of the battery pack.

## Description

### [Technical Field]

This application claims the benefit of priority based on Korean Patent Application No. 10-2020-0002138, filed on January 7, 2020, and the entire contents of the Korean patent application are incorporated herein by reference.

The present invention relates to a battery pack including a high voltage (HV) wire assembly and a method for manufacturing the battery pack.

### [Background Art]

In general, a secondary battery is a battery which can be repeatedly used by allowing charging and discharging. The secondary battery consists of one battery module and is used for portable compact electronic devices such as mobile phones, laptops, computers, cameras, camcorders, etc. or consists of a battery pack containing a plurality of cell modules and is used as a power source for driving a motor of a high power hybrid electric vehicle (HEV), electric vehicle (EV), etc.

In particular, electric vehicles use electric energy of a high output, so they need multiple battery modules per vehicle. Thus, the battery modules are aligned on a tray and are mounted in a case to thereby form a battery back. The battery modules mounted on the tray are electrically interconnected through connection wiring such as wire harness, and are also connected to a control circuit and an electrical supply circuit.

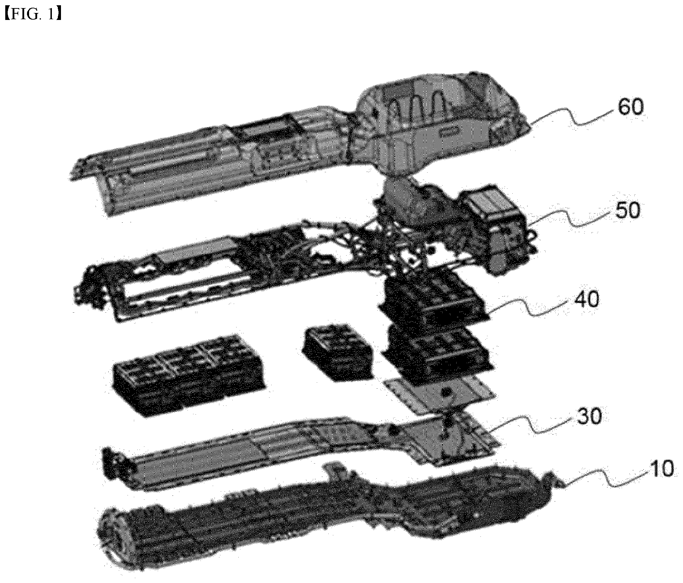

FIG. 1 is an exploded perspective view of a conventional battery pack. Referring to FIG. 1, the existing battery pack is manufactured by the following processes. First, a cooling plate 30 and a battery module 40 are mounted on a tray 10, then a wire harness 50 including an LV wire and a HV wire is formed, and then a battery pack cover 60 is assembled. However, such a scheme is designed so that a wire harness 50 is located on the battery module 40. As such, a separate fixing structure is required, and a wiring job is not easy.

### [Disclosure]

### [Technical Problem]

The present invention has been created to solve the above problems, and an object of the present invention is to provide a battery pack having an improved productivity and a method of manufacturing the same by modularizing the assembly of the HV wire portion by disconnecting the connection of the HV wire and the LV wire when manufacturing the battery pack.

### [Technical Solution]

The present invention provides a battery pack. In one example, a battery pack according to the present invention includes: a tray; a plurality of battery modules mounted on the tray; a battery pack cover configured to cover the battery module; a high voltage (HV) wire assembly formed between the battery module and the tray; and a low voltage (LV) wiring formed on an upper surface of the battery module, wherein the HV wire assembly includes an insulating substrate, and a bus bar for electrically connecting the plurality of battery modules.

In one example, the battery pack according to the present invention further includes a cooling plate formed between the battery module and the HV wire assembly.

In another example, the HV wire assembly has a structure in which the bus bar for wiring is attached to a lower surface of the insulating substrate.

In another example, the HV wire assembly has a structure in which the bus bar for wiring is recessed in the insulating substrate.

In a specific example, the insulating substrate has a structure where a plurality of through holes are formed.

Further, a vertical bus bar for electrically connecting the battery module with the bus bar for wiring is inserted into one of the plurality the through holes.

One end of the vertical bus bar comes in contact with a high voltage (HV) terminal of the battery module, and an other end of the vertical bus bar comes in contact with the bus bar for wiring in a state in which the other end is inserted into one of the plurality the through holes.

In another specific example, the battery pack further includes at least one of an output terminal configured to transmit electrical energy or a control signal stored in the battery module to an external side; an input terminal configured to transmit external electrical energy or control signal to the battery module; and an input and output terminal configured to transmit electrical energy or control signal stored in the battery module to the outside or transmit the external electrical energy to the battery module.

Herein, the HV wire assembly electrically connects the battery module with one or more of an input terminal, an output terminal, and an input and output terminal of the battery pack.

In another example, the LV wiring electrically connects the battery module with an electrical device.

In one example, the battery pack cover covers an upper portion and a side surface of the battery module at the same time.

The present invention provides a vehicle including a battery pack described above.

The present invention also provides a method for manufacturing the battery pack described above. In one example, a method for manufacturing a battery pack according to the present invention includes: providing a high voltage (HV) wire assembly including an insulating substrate, and a bus bar for electrically connecting a plurality of battery modules; mounting the HV wire assembly on a tray; mounting the plurality of battery modules on the HV wire assembly; and mounting a low voltage (LV) wiring on the plurality of battery modules.

In one example, providing of the HV wire assembly includes attaching a bus bar for wiring to a lower surface of the insulating substrate.

In another example, providing of the HV wire assembly includes integrally forming the insulating substrate and the bus bar for wiring to allow the bus bar for wiring to be recessed in the insulating substrate.

In a specific example, the method further includes inserting a vertical bus bar into a through hole formed on the insulating substrate and fixing the vertical bus bar at the insulating substrate and the plurality of battery modules, after mounting the plurality of battery modules on the HV wire assembly.

In a specific example, the method further includes mounting a cooling plate on the HV wire assembly after mounting the HV wire assembly on the tray.

In a specific example, the HV wire assembly is electrically connected to the plurality of battery modules and one or more of an input terminal, an output terminal and an input and output terminal of the battery pack, and the LV wiring is electrically connected to an electrical device after the step of forming the LV wiring on the battery module.

### [Advantageous Effects]

According to a battery pack and a method for manufacturing the battery pack of the present invention, pack production can be automated through modularization of the assembly process of HV wires, and the productivity can be improved by reducing time and costs that are used for the process.

### [Brief Description of the Drawings]

FIG. 1 is an exploded perspective view of a conventional battery pack.
FIG. 2 is an exploded perspective view of a battery pack according to one embodiment of the present invention.
FIG. 3 is an exploded perspective view of a high voltage (HV) wire assembly applied to a battery pack according to one embodiment of the present invention.
FIG. 4 is a vertical cross-sectional view of an HV wire assembly according to one embodiment of the present invention.
FIG. 5 is an exploded perspective view of an HV wire assembly applied to a battery pack according to another embodiment of the present invention.
FIG. 6 is a vertical cross-sectional view illustrating a bus bar for wiring having been recessed in a HV wire assembly according to another embodiment of the present invention.
FIG. 7 is a vertical cross-sectional view illustrating a vertical bus bar having been inserted in a HV wire assembly according to another embodiment of the present invention.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

The present invention provides a battery pack. A battery pack according to the present invention includes: a tray; a plurality of battery modules mounted on the tray; a battery pack cover configured to cover the battery module; a high voltage (HV) wire assembly formed between the battery module and the tray; and a low voltage (LV) wiring formed on an upper surface of the battery module, wherein the HV wire assembly includes an insulating substrate, and a bus bar for electrically connecting the plurality of battery modules.

In a battery pack according to the present invention, a HV wire assembly is mounted on a tray when manufacturing a battery pack, and a battery module is then mounted thereon. The LV wiring is formed on the mounted battery module. Namely, electric connection, which relatively requires a high voltage like an input/output terminal of a battery module, is performed through the HV wire assembly. Further, like a battery electric device, electric connection, which relatively requires a low voltage, is performed through LV wiring. The safety of the battery pack can be increased in that high voltage and low voltage electric connections are separately performed in the battery pack.

On the other hand, in a battery pack according to the present invention, by modularizing and componentizing a HV wire assembly on a tray, the HV wire assembly is manufactured by a separate process without assembling a wire harness on a battery module and is then mounted on the tray, and only LV wiring may need to be formed on the battery module. Through this, takt time, which is used in assembling a wire harness, can be reduced, and the manufacturing unit cost can be reduced.

The battery module has a plurality of battery cells therein. In particular, the battery cell may be a pouch-type battery cell and has a structure having an electrode assembly, an electrolyte solution, and a pouch case. The configuration of such a battery cell is obvious to a person skilled in the art to which the present invention pertains, and thus a more detailed description thereof will be omitted. In addition, various secondary batteries known at the time of filing the present invention may be employed in the battery pack according to the present invention. Further, the negative electrode lead and the positive electrode lead are formed on the negative electrode and the positive electrode of the battery cell provided at the inside, respectively, and these are each connected through welding and the like to thereby form a HV terminal.

In one embodiment, the battery pack according to the present invention further includes a cooling plate formed between a battery module and a HV wire assembly. The cooling plate is for preventing heating of the battery module. In the battery pack, a cooling plate is formed at the lower end of the battery module, and a HV wire assembly is formed at the bottom of the cooling plate. When manufacturing a battery pack, by forming a cooling plate between a battery module and a HV wire assembly, a cooling effect for the battery module is increased, and the HV wire assembly, on which a high voltage current flows, may be separated from the battery module.

The cooling plate allows a refrigerant to pass through the cooling plate into an internal refrigerant flow path to absorb heat from a battery module by heat contacts, thereby serving as a component for performing an indirect cooling. The refrigerant passing through the cooling plate can be easily flowed in the refrigerant flow path and a fluid excellent in cooling may be used. As the cooling plate is mounted on the lower portion (tray direction) of the battery module, the safety of the battery pack can be improved by preventing a short circuit of the battery module even if a fluid is leaked from the cooling plate.

In one embodiment, the HV wire assembly has a structure in which a bus bar for wiring is attached to the lower surface of the insulating substrate. The present invention can improve the safety of the battery pack by applying an insulating substrate to the HV wire assembly. Further, by forming a bus bar for wiring to the lower surface of the insulating substrate, a necessary space required for the bus bar formation can be minimized, and the mechanical strength and durability of the bus bar can be increased.

In another example, the HV wire assembly has a structure in which a bus bar for wiring is recessed in the insulating substrate. In this case, the HV wire assembly may be formed through an insert injection. In this case, a groove for insertion of a bus bar for wiring is formed on an insulating substrate, and the bus bar for wiring may be inserted thereto. Through this, there is an advantage that the safety of the HV wire assembly is increased and a separate assembly process for the bus bar for wiring is not required.

In addition, in order to form a bus bar for wiring at a position between insulating substrates, two insulating substrates may be prepared, and the HV wire assembly may have a structure in which the bus bar is interposed between the insulating substrates.

In one embodiment, the insulating substrate has a structure in which a plurality of through holes are formed. In addition, a vertical bus bar for electrically connecting the battery module with the bus bar for wiring can be inserted into the through holes. As described above, the battery pack has a structure in which a cooling plate is formed between the battery module and the HV wire assembly. In this case, a direct connection between the battery module and the HV wire assembly is interfered due to the cooling plate formation. In the present invention, the battery module and the HV wire assembly are electrically connected in a bypassing manner through the vertical bus bar. The through hole may be formed on the edge of the insulating substrate to prevent the vertical bus bar from being in contact with the cooling plate, and a separate through hole may be formed in a portion where a refrigerant flow path is not passed in the cooling plate, and a vertical bus bar can be inserted into the through hole.

One end of the vertical bus bar may be connected to a high voltage (HV) terminal of the battery module, and the other end may come in contact with the bus bar for wiring in a state in which the other end has been inserted into the through hole. In addition, the vertical bus bar may be fixed through a HV terminal and a bus bar for wiring and welding, etc. In the battery pack according to the present invention, a HV wire assembly and LV wiring are located on different planes, based on the battery module. In this case, the HV wire assembly is connected to an external side or performs electric connection which requires a relatively high voltage.

In one example, the battery pack further includes at least one of an output terminal configured to transmit electrical energy or a control signal stored in the battery module to an external side; an input terminal configured to transmit external electrical energy or control signal to the battery module; and an input and output terminal configured to transmit electrical energy or control signal stored in the battery module to the outside or transmit the external electrical energy to the battery module. In this case, for example, the HV wire assembly electrically connects the battery module with one or more of an input terminal, an output terminal, and an input and output terminal of the battery pack.

In another embodiment, the LV wiring has a structure for electrically connecting a portion between the battery module and the electrical device. For example, the electrical device includes a battery management system (BMS) that monitors and controls the operation of a battery module, a battery disconnection unit (BDU) that controls electrical connections of the battery module, a fuse that is located between the battery module and the BMS and provides a function of blocking overcurrent, etc. In other words, the LV wiring performs an electrical connection that requires a relatively low voltage such as a connection inside the battery pack.

In one embodiment, the tray has a structure in which a plurality of battery modules are mounted, and the battery pack cover has a structure that simultaneously covers the upper portion and the side surface of the battery module. However, the structure of such a tray and battery pack cover corresponds to one example, and the external structure and shape, etc. of the battery pack may vary depending on the requirements of the related fields or companies.

The present invention provides a vehicle including a battery pack described above. The vehicle is, for example, an electric vehicle or a hybrid vehicle.

The present invention also provides a method for manufacturing the battery pack described above. In one example, a method for manufacturing a battery pack according to the present invention includes: a step of manufacturing a high voltage (HV) wire assembly including an insulating substrate, and a bus bar for electrically connecting a plurality of battery modules; a step of mounting the HV wire assembly on a tray; a step of mounting the battery modules on the HV wire assembly; and a step of mounting a low voltage (LV) wiring on the battery modules.

According to the method for manufacturing a battery pack according to the present invention, when manufacturing a battery pack, a HV wire assembly is formed on a tray, then a battery module is mounted, and then a LV wiring is formed on the mounted battery module. In the present invention, by forming a HV wire assembly on a tray in advance, only LV wiring may be formed on the battery module. That is, in the present invention, by separately modularizing and componentizing the HV wire assembly, takt time, which is spent for assembling a wire harness, may be reduced, and the manufacturing unit costs may be reduced. Further, according to the method for manufacturing a battery pack, the safety of the battery pack can be improved because electric connection of a high voltage and electric connection of a low voltage are separately performed.

In one example, the step of manufacturing the HV wire assembly includes attaching a bus bar for wiring to a lower surface of the insulating substrate. According to the present invention, by forming a HV wire assembly including an insulating substrate, the safety of the battery pack can be secured, and the mechanical strength and durability of the bus bar for wiring can be improved. At this time, the method of attaching the insulating substrate and the bus bar for wiring may be appropriately selected in known techniques such as adhesives and soldering.

In another example, the step of manufacturing the HV wire assembly includes integrally forming the insulating substrate and the bus bar for wiring to allow the bus bar for wiring to be recessed in the insulating substrate. In this case, the bus bar for wiring is not exposed to the lower portion of the insulating substrate, and specifically, the HV wire assembly may be formed through an insert injection. Through this, there is an advantage that the safety of the HV wire assembly is increased and a separate assembly process for the bus bar for wiring is not required. Also, by mounting an additional insulating substrate on a lower portion of the insulating substrate in which the bus bar for wiring is attached, the bus bar for wiring is disposed between the insulating substrates, and the bus bar for wiring is prevented from being damaged. Alternatively, a bus bar for wiring may be inserted into the groove of the HV wire assembly.

In other embodiment, the manufacturing method according to the present invention further includes a step of forming a cooling plate on a HV wire assembly after a step of mounting a HV wire assembly on a tray. After forming a cooling plate on the HV wire assembly, the battery module is formed thereon. The cooling plate is for preventing heating of the battery module. In the present invention, when manufacturing a battery pack, by forming a cooling plate between a battery module and a HV wire assembly, a cooling effect for the battery module is increased, and the HV wire assembly, on which a high voltage current flows, may be separated from the battery module.

In further another embodiment, the manufacturing method according to the present invention further includes a step of inserting a vertical bus bar into a through hole formed on the insulating substrate after a step of mounting a battery module on the HV wire assembly. The vertical bus bar is intended to electrically connect the HV wire assembly and the battery module. In the present invention, the battery module and the HV wire assembly are electrically connected in a bypassing manner through the vertical bus bar.

In further another example, the HV wire assembly is electrically connected to the battery module and one or more of the input terminal, output terminal, and input/output terminal of the battery pack, and the LV wiring is electrically connected to the battery module and the electric device. In the present invention, a HV wire assembly and LV wiring are located on different planes, based on the battery module. Particularly, since the wire harness located on the battery module is only LV wiring in the present invention, it is possible to simplify the assembly process of the battery pack.

Hereinafter, the present invention will be described in more detail through drawings and the like. However, the embodiments described in the specification and the configurations described in the drawings are only the most preferred embodiments of the present invention, and do not represent all of the technical ideas of the present invention. It is to be understood that there may be various equivalents and variations in place of them at the time of filing the present application.

### (First embodiment)

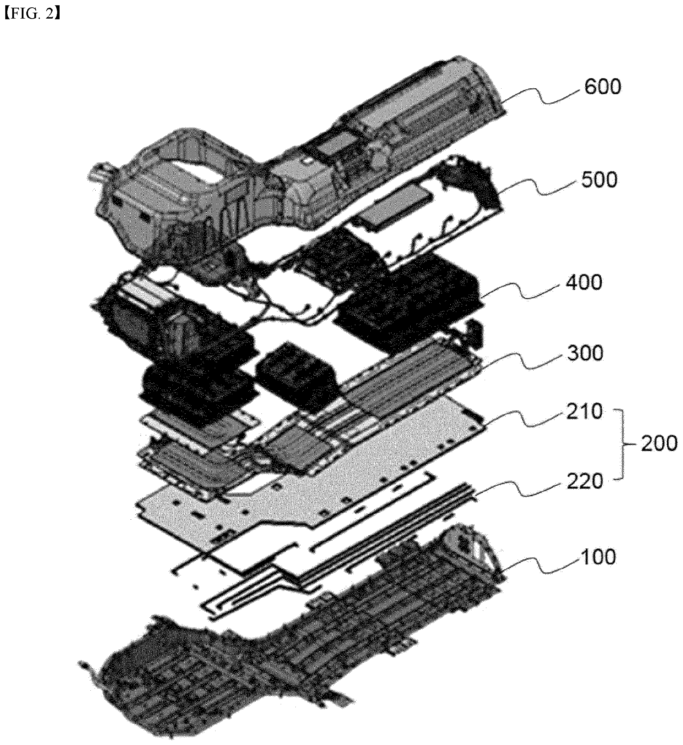

FIG. 2 is an exploded perspective view of a battery pack according to one embodiment of the present invention. Referring to FIG. 2, a battery pack according to the present invention has a structure in which a tray 100, a high voltage (HV) wire assembly 200, a cooling plate 300, a plurality of battery modules 400, a low voltage (LV) wiring 500 and a battery pack cover 600 are sequentially formed. Further, the HV wire assembly 200 includes an insulating substrate 210 and a bus bar 212 for wiring which is formed on the lower surface of the insulating substrate 210. In order to assembly the battery pack, the HV wire needs to be fastened with the LV wire. Generally, the assembly process of connecting the HV and LV wire on the mounted battery module with the battery module is performed. However, such a complex wire connection process reduces the process efficiency, and in some cases, there is a risk of sparks due to voltage differences between wires that require different voltages.

In the present invention, the HV wire assembly 200 and the LV wiring 500 are separately formed. Specifically, the HV wire assembly 200 electrically connects the battery module 400 with the input/output terminal (not shown) of the battery pack. The HV wire assembly 200 is a wiring related to the output of the battery pack, which requires a relatively high voltage. In the present invention, by installing the HV wire assembly 200 in a manner that is modularized and componentized and is then mounted on a tray, takt time, which is spend for the process of assembling a wire harness, can be reduced, and the manufacturing unit costs can be reduced. Further, in the HV wire assembly, electric connection is performed through the bus bar 212 for wiring, not a simple wire, and the safety of the battery pack was secured by forming the bus bar 212 for wiring on the lower surface of the insulating substrate 210. Further, the LV wiring 500 electrically connects the battery module 400 with the electrical device. For example, the electric device includes a battery management system (BMS), a battery disconnection unit (BDU), a fuse, etc.

In the present invention, a cooling plate 300 is positioned between the battery module 400 and the HV wire assembly 200. The cooling efficiency of the battery module 400 can be improved by forming the cooling plate 300 on a position closely attached to the battery module 400. Further, as the cooling plate 300 is positioned at the lower portion of the battery module, the short circuit of the battery module can be prevented even when a refrigerant is leaked, and the cooling plate 300 also plays a role of blocking contact between the battery module 400 and the HV wire assembly 200.

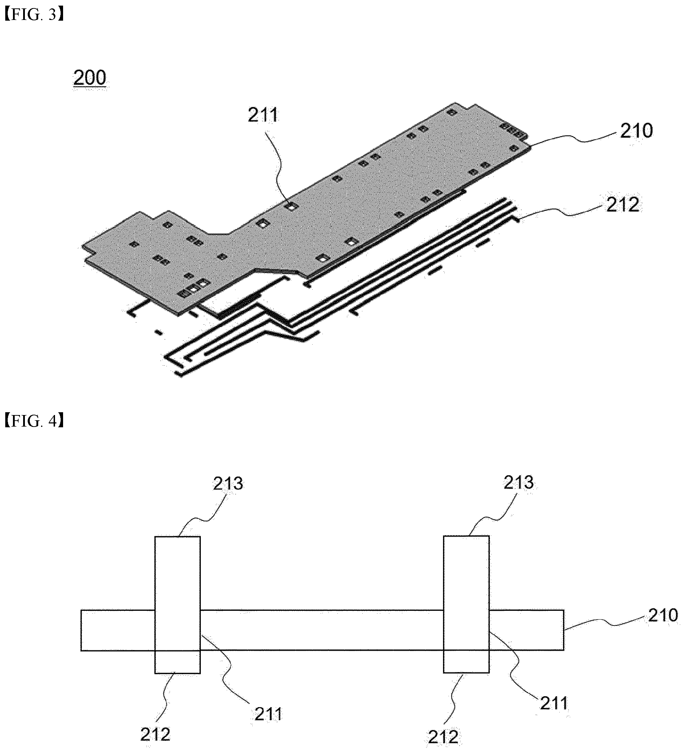

FIG. 3 is an exploded perspective view of a high voltage (HV) wire assembly applied to a battery pack according to one embodiment of the present invention, and FIG. 4 is a vertical cross-sectional view of an HV wire assembly according to one embodiment of the present invention. Referring to FIGS. 3 and 4, the HV wire assembly 200 includes an insulating substrate 210 and a bus bar 212 for wiring formed on the lower surface of the insulating substrate 210. Further, a plurality of through holes 211 are formed on the edge of the insulating substrate 210. The vertical bus bar 213 is inserted into the through hole formed on the insulating substrate and is electrically connected to the battery module by contacting the bus bar for wiring.

### (Second embodiment)

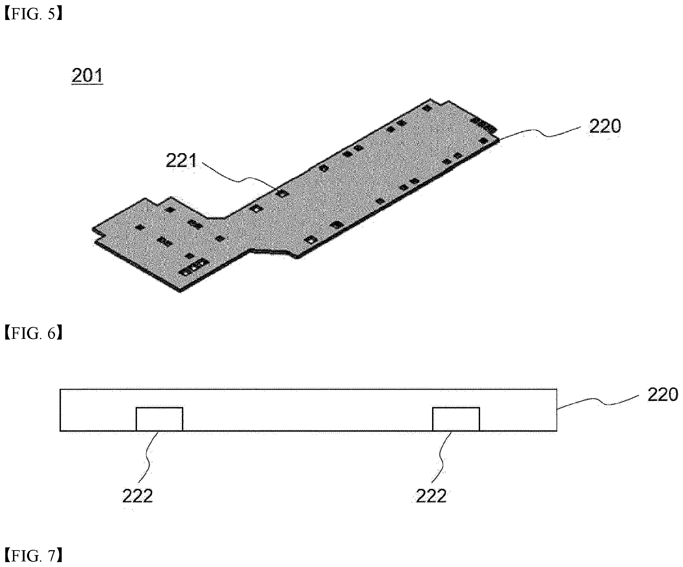

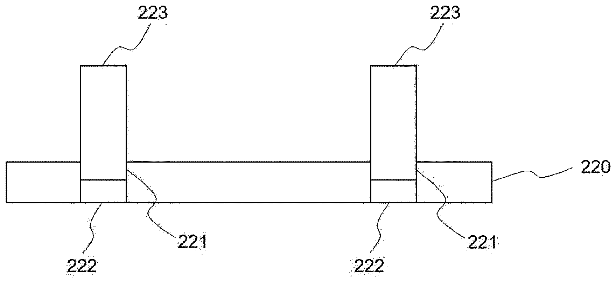

FIG. 5 is an exploded perspective view of an HV wire assembly applied to a battery pack according to another embodiment of the present invention, FIG. 6 is a vertical cross-sectional view illustrating a bus bar for wiring having been recessed in a HV wire assembly according to another embodiment of the present invention, and FIG. 7 is a vertical cross-sectional view illustrating a vertical bus bar having been inserted in a HV wire assembly according to another embodiment of the present invention. Referring to FIGS. 5 to 7, the HV wire assembly 201 includes an insulating substrate 220 and a bus bar 222 for wiring recessed in the insulating substrate 220. Specifically, there is a groove which is recessed on the lower portion of the insulating substrate 220, and the bus bar 222 for wiring is coupled with the groove. Further, a plurality of through holes 221 are formed on the insulating substrate 220. Further, the vertical bus bar 223 electrically connects the battery module with the HV wire assembly 201. One end of the vertical bus bar 223 is inserted into the through hole 221 to thereby come in contact with the bus bar 222 for wiring.

The above description is merely illustrative of the technical idea of the present invention, and those skilled in the art to which the present invention pertains may make various modifications and variations without departing from the essential characteristics of the present invention. Therefore, the drawings disclosed in the present invention are not intended to limit the technical idea of the present invention but to describe the present invention, and the scope of the technical idea of the present invention is not limited by these drawings. The scope of protection of the present invention should be interpreted by the following claims, and all technical ideas within the scope equivalent thereto should be construed as being included in the scope of the present invention.

### [Description of reference numerals]

- 10, 100:: tray
- 30, 300:: cooling plate
- 40, 400:: battery module
- 50:: wire harness
- 60, 600:: pack cover
- 200, 201:: HV wire assembly
- 210, 220:: insulating substrate
- 211, 221:: through hole
- 212, 222:: bus bar for wiring
- 213, 223:: vertical bus bar
- 500:: LV wiring

## Claims

1. A battery pack comprising:
a tray;
a plurality of battery modules mounted on the tray;
a battery pack cover configured to cover the battery module;
a high voltage (HV) wire assembly formed between the battery module and the tray; and
a low voltage (LV) wiring formed on an upper surface of the battery module,
wherein the HV wire assembly includes an insulating substrate, and a bus bar for electrically connecting the plurality of battery modules.

2. The battery pack of claim 1, further comprising a cooling plate formed between the battery module and the HV wire assembly.

3. The battery pack of claim 1, wherein the bus bar for wiring is attached to a lower surface of the insulating substrate.

4. The battery pack of claim 1, wherein the HV wire assembly has a structure in which the bus bar for wiring is recessed in the insulating substrate.

5. The battery pack of claim 1, wherein the insulating substrate has a structure where a plurality of through holes are formed.

6. The battery pack of claim 5, wherein a vertical bus bar for electrically connecting the battery module with the bus bar for wiring is inserted into the one of the plurality through holes.

7. The battery pack of claim 6, wherein one end of the vertical bus bar comes in contact with a high voltage (HV) terminal of the battery module, and an other end of the vertical bus bar comes in contact with the bus bar for wiring in a state in which the other endis inserted into the one of the plurality through holes.

8. The battery pack of claim 1, further comprising at least one of:
an output terminal configured to transmit electrical energy or a control signal stored in the battery module to an external side;
an input terminal configured to transmit external electrical energy or control signal to the battery module; and
an input and output terminal configured to transmit electrical energy or control signal stored in the battery module to the outside or transmit the external electrical energy to the battery module,
wherein the HV wire assembly electrically connects the battery module with one or more of an input terminal, an output terminal, and an input and output terminal of the battery pack.

9. The battery pack of claim 1, wherein the LV wiring electrically connects the battery module with an electrical device.

10. The battery pack of claim 1, wherein the battery pack cover covers an upper portion and a side surface of the battery module at the same time.

11. A vehicle comprising the battery pack according to claim 1.

12. A method for manufacturing a battery pack, comprising:
providing a high voltage (HV) wire assembly including an insulating substrate, and a bus bar for electrically connecting a plurality of battery modules;
mounting the HV wire assembly on a tray;
mounting the plurality of battery modules on the HV wire assembly; and
mounting a low voltage (LV) wiring on the plurality of battery modules.

13. The method of claim 12, wherein providing ofthe HV wire assembly includes attaching the bus bar for wiring to a lower surface of the insulating substrate.

14. The method of claim 12, wherein providing of the HV wire assembly includes integrally forming the insulating substrate and the bus bar for wiring to allow the bus bar for wiring to be recessed in the insulating substrate.

15. The method of claim 12, further comprising inserting a vertical bus bar into a through hole formed on the insulating substrate and fixing the vertical bus bar at the insulating substrate and the plurality of battery modules, after mounting of the plurality of battery modules on the HV wire assembly.

16. The method of claim 12, further comprising mounting a cooling plate on the HV wire assembly after the mounting of the HV wire assembly on the tray.

17. The method of claim 12, wherein the HV wire assembly is electrically connected to the plurality of battery modules and one or more of an input terminal, an output terminal and an input and output terminal of the battery pack, and the LV wiring is electrically connected to an electrical device.
